# EUROPEAN PATENT SPECIFICATION

(11) **EP 1 584 828 B1**
(45) Date of publication and mention of the grant of the patent: **13.02.2013**
(21) Application number: 03777400.7
(22) Date of filing: 09.12.2003
(51) Int. Cl.: F16C 33/20

(54) **SLIDING BEARING**
GLEITLAGER
PALIER A GLISSEMENT

(30) Priority: 08.01.2003 JP 2003001832
(43) Date of publication of application: 12.10.2005
(73) Proprietor: Taiho Kogyo Co., Ltd, Toyota-shi, Aichi 471-8502 (JP)
(72) Inventor: KAWAGOE, Kimio, c/o Taiho Kogyo Co., Ltd., Toyota-shi, Aichi 471-8502 (JP); HASHIZUME, Katsuyuki, c/o Taiho Kogyo Co., Ltd., Toyota-shi, Aichi 471-8502 (JP)
(74) Representative: Naylor, Matthew John
(86) International application number: PCT/JP2003/015730
(87) International publication number: WO 2004/063584

(56) References cited:
- EP-A- 1 281 881
- EP-A1- 1 236 914
- DE-C1- 3 328 509
- JP-A- 10 131 969
- JP-A- 2002 147 459
- JP-A- 2003 269 454
- US-A- 5 129 739
- US-B1- 6 491 436

## Description

### TECHNICAL FIELD

The present invention relates to a sliding bearing, and more particularly, to a sliding bearing comprising a bearing alloy layer and an overlay layer disposed on the surface of the bearing alloy layer and formed by a solid lubricant and a resin.

### BACKGRONUD ART

A sliding bearing is known in the art which comprises an overlay layer disposed on the surface of a bearing alloy layer and formed by a solid lubricant and a resin, as disclosed in Japanese Patent No.3133209 (hereafter referred to as patent literature 1) and Japanese Laid-Open Patent Application No.2002-61652 (hereafter referred to as patent literature 2).

A sliding bearing according to the preamble of claim 1 is known from EP1236914 A1.

In patent literatures 1 and 2, the provision of the overlay layer improves the fitting property between the sliding bearing and a rotary shaft and a seizure resistance thereof by a plastic deformation of the overlay layer.

However, in sliding bearings constructed according to the patent literatures 1 and 2, the surface of the overlay layer assumes an irregular configuration in actuality because the overlay layer is sprayed on as by an air spray and then merely set under heat.

Consequently, when the rotary shaft is subject to a high speed rotation, the irregularly configured surface of the overlay layer cannot distribute a lubricant oil evenly, presenting problems that the seizure resistance may be degraded and/or a plastic deformation of the overlay layer resulting from the contact of the surface of the overlay layer with the rotary shaft may become uneven to result in an insufficient fitting property.

### DISCLOSURE OF THE INVENTION

In view of the foregoing problems, the present invention provides a sliding bearing having an excellent seizure resistance and a fitting property response if a rotary shaft is subject to a high speed rotation.

Specifically, the present invention provides a sliding bearing as set out in claim 1.

According to the present invention, a regular uneven patterned configuration is formed on the surface of the overlay layer to secure a lubricant in the recesses of the uneven configuration to prevent the sliding bearing from assuming a high temperature, thus improving the seizure resistance. Since the bearing alloy layer has a surface at the boundary with the overlay layer which is machined to be a flat surface having a fine roughness, the overlay layer has a uniform cross-sectional configuration at all convex areas in the uneven configuration, whereby stresses applied from the rotary shaft to the individual convex areas are also uniform, allowing all of the convex areas to be subject to a uniform plastic deformation, thus improving the fitting property response of the sliding bearing.

### BRIEF DESCRIPTION OF THE DRWAINGS

Fig. 1 is an enlarged axial section of a sliding bearing;
Fig. 2 graphically shows results of an experiment, illustrating the seizure resistance according to the present invention;
Fig. 3 graphically shows results of an experiment, illustrating the fitting property response according to the present invention;
Figs. 4(a)~(f) are developed views of spilt halves of sliding bearings according to other embodiments of the present invention; and
Figs. 5(a)-(d) and 5(f)-(h) are cross sections illustrating the uneven configuration of other embodiments of the present invention; Fig. 5 (e) is outside the scope of the invention.

### BEST MODES FOR CARRING OUT THE INVENTION

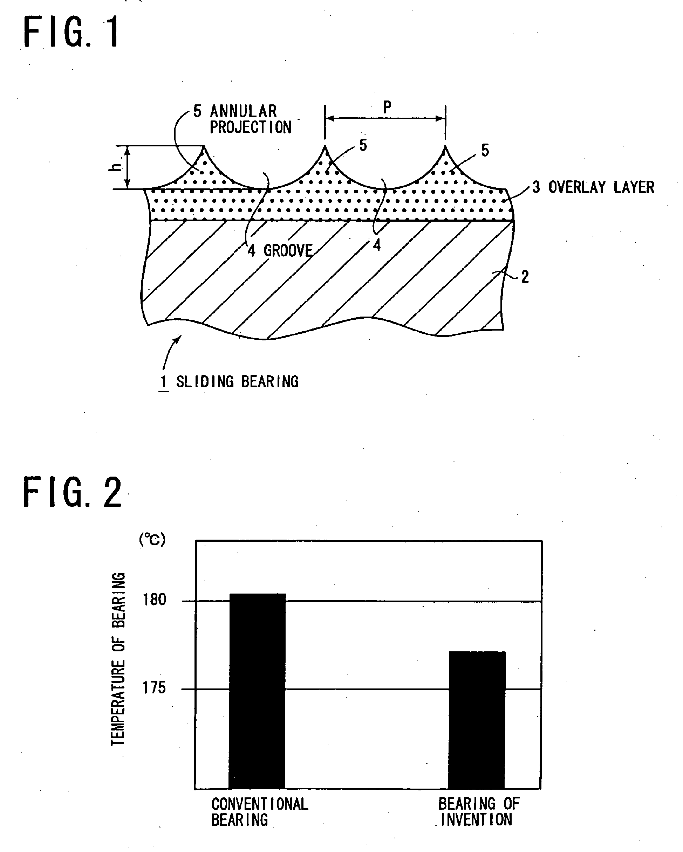

Several embodiments of the present invention shown in the drawings will now be described. Fig. 1 is an enlarged axial section of a cylindrical sliding bearing 1. The sliding bearing 1 comprises a metal backing layer, not shown, a bearing alloy layer 2 formed on the surface of the metal backing layer which is located toward the axis of the sliding bearing 1, and an overlay layer 3 formed on the surface of the bearing alloy layer 2.

The bearing alloy layer 2 is formed of an alloy which principally comprises a copper or an aluminium and has an inner peripheral surface which is machined to be a flat surface having a fine roughness and extending parallel to the axis of the sliding bearing 1. The overlay layer 3 comprises MoS₂ as a solid lubricant and PAI resin as a binder resin. The overlay layer 3 is sprayed onto the surface of the bearing alloy layer 2 which is machined to be a flat form as by an air spray, and is set under heat, thus initially forming a layer on the order 10~20gm.

The surface of the overlay layer 3 is then machined to form a circumferentially extending helical groove 4 and an annular projection 5 which define an uneven configuration. The groove 4 which represents a recess is arcuate in section, and is formed at a pitch P as is the annular projection 5 which represents a convex area located adjacent to the groove.

It is to be noted that all the annular projections 5 are formed so that their crests are disposed at a given spacing with respect to the bearing alloy layer 2, and all the grooves 4 are formed to have a definite depth h. Accordingly, the configuration of the overlay layer 3 is uniform at each annular projection 5.

With the sliding bearing 1 constructed in the manner mentioned above, a lubricant oil can be evenly distributed around the inner periphery of the sliding bearing 1 by providing the grooves 4 in a regular manner in the surface of the overlay layer 3 to allow the lubricant oil to pass therethrough. Accordingly, if a rotary shaft is subject to a high speed rotation, a temperature rise of the sliding bearing 1 can be alleviated, thus allowing an excellent seizure resistance to be obtained.

By contrast, in a conventional sliding bearing, the surface of the overlay layer assumes an irregular configuration, which prevents a lubricant oil from being distributed evenly around the inner periphery of the sliding bearing, resulting in a problem that portions of the rotary shaft may rise in temperature when it is subject to a high speed rotation. When a rotary shaft is journalled by the sliding bearing 1 of the present embodiment, the load from the rotary shaft is applied to the crests of the annular projections 5, but because the annular projections 5 are formed at a constant pitch, the annular projections 5 are subject to an equal pressure. In addition, because the overlay layer 3 assumes a similar configuration at each annular projection 5, the latter is subject to a plastic deformation in the similar manner, allowing an excellent fitting property response of the sliding bearing 1 to be obtained.

By contrast, in a conventional sliding bearing, an irregular configuration of the surface of the overlay layer causes uneven pressures to be applied to the surface of the overlay layer when the rotary shaft is jounalled in the sliding bearing, causing an uneven plastic deformation of the overlay layer, resulting in an insufficient fitting property response.

It is to be noted that when the surface of the bearing alloy layer 2 is not a flat surface having a fine roughness if the overlay layer 3 is formed on the surface bearing alloy layer 2 and the annular projections 5 are subsequently formed thereon, it follows that the configuration which the overlay layer 3 assumes at each annular projection 5 varies from projection to projection even if each annular projection 5 itself is configured in the similar manner.

In this instance, if the pressure applied to each annular projection 5 is equal, a plastic deformation of the individual annular projections 5 occurs in a non-uniform manner, resulting in a non-uniform contact between the rotary shaft and the deformed annular projections 5, which means that a satisfactory fitting property response of the sliding bearing 1 cannot be obtained.

Suppose that annular projections were formed on the surface of the metal bearing alloy layer 2 in aliment with the locations of the annular projections 5 in a similar manner as on the surface of the overlay layer 3. In this instance, each annular projection 5 of the overlay layer 3 will be evenly subject to a plastic deformation. However, the degree of the plastic deformation which occurs in the overlay layer 3 is reduced, and hence a plastic deformation of the annular projections 5 will be reduced as compared to an arrangement in which the surface the bearing alloy layer 2 is machined to be flat, resulting in a failure to achieve a satisfactory fitting property response of the sliding bearing 1.

An experiment has been conducted for the sliding bearing 1 of the present embodiment. Two sliding bearings are used in the experiment, both including the bearing alloy layer 2 comprising an aluminium alloy.

Of these sliding bearings, the-sliding bearing according to the present invention has the bearing alloy layer 2 having a surface which is machined to exhibit a surface roughness of 2umRz or less by shot blasting or etching. By contrast, the other sliding bearing according to the prior art has the bearing alloy layer 2, the surface of which is not machined in any particular manner to provide a flat surface.

An overlay layer 3 comprising PAI resin including 40% of MoS₂ and having a thickness of 6µm is formed on the surface of the bearing alloy layer of either the sliding bearing according to the present invention and the conventional sliding bearing. Grooves 4 are formed into the surface of the overlay layer 3 of the sliding bearing according to the present invention as by a boring operation to a depth of h=2µm at a pitch of P=200µm while no such boring operation is applied to the surface of the overlay layer 3 of the conventional sliding bearing.

Fig. 2 graphically shows results measured with a rotary load testing machine for the seizure resistance of the sliding bearings according to the invention and according to the prior art. The test took place under conditions that the peripheral speed of the rotary shaft at the surface of a sliding contact between the sliding bearing 1 and the rotary shaft is equal to 17.6m/s, the load applied to the sliding bearing 1 is equal to 29MPa and the temperature of the lubricant oil supplied between the sliding bearing 1 and the rotary shaft is equal to 140°C. The experiment mentioned above yielded results of test shown in Fig. 2 where it is noted that the temperature of the sliding bearing 1 according to the present invention can be suppressed below 180°C while the temperature of the sliding bearing 1 of the prior art exceeds 180°C. Thus it is seen that a better lubrication by the lubricant oil takes place in a more favorable manner in the sliding bearing 1 according to the present invention as compared with a conventional sliding bearing, thus providing an excellent seizure resistance.

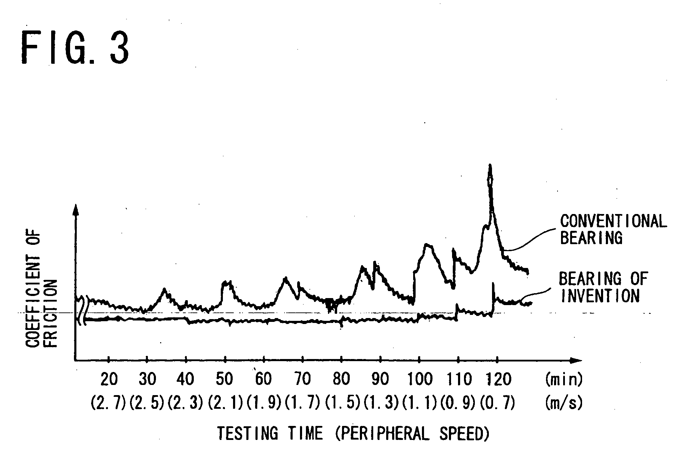

Fig. 3 graphically shows a result of determination of the fitting property response of the sliding bearings 1 according to the present invention and according to the prior art which took place with a superhigh pressure testing machine. The test took place at a load applied to the sliding bearing 1 which is equal to 29MPa, at the temperature of the lubricant oil supplied to the sliding bearing 1 which is equal to 140°C, at the peripheral speed of the rotary shaft at the surface of sliding contact between the sliding bearing 1 and the rotary shaft which is decreased gradually from 2.7m/s to 0.7m/s at a rate of 0.2m/s over a time interval of ten minutes, and the determination is started at a time interval of 20 minutes from the commencement of operation of the superhigh pressure testing machine to determine a change in the coefficient of friction. It will be understood that the smaller a change in the coefficient of friction as the peripheral speed is reduced, the better the fitting property response.

Fig. 3 graphically shows results of this experiment where the ordinate represent the coefficient of friction between the sliding bearing 1 and the rotary shaft and the abscissa time elapsed. With reference to a graph indicating the response of the prior art product, a sharp rise in the coefficient of friction indicates the instant when the peripheral speed of the rotary shaft is decreased. It is seen from results of this experiment that with the prior art sliding bearing, the peak in the coefficient friction rises higher as the peripheral speed is decreased while in the sliding bearing according to the present invention, a rise in the coefficient of friction is not so high.

Accordingly, it could be concluded that the sliding bearing 1 according to the present invention exhibits a more excellent fitting property response as compared with the sliding bearing of the prior art. This is attributable to the fact that the pressure applied to the surface of the overlay layer is more even, accompanying an even plastic deformation of the annular projections.

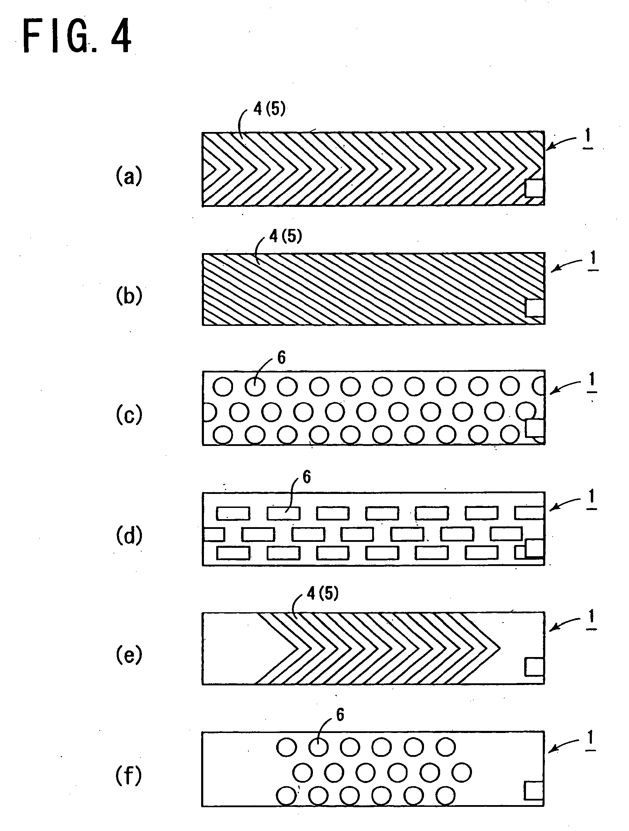

Fig. 4 shows uneven configurations of sliding bearings of other embodiments which are different from the uneven configuration mentioned above. Each view represents a developed view of the sliding bearing 1 as viewed from the inner periphery thereof, illustrating patterns for the uneven configurations.

In these sliding bearings 1 also, the surface of the bearing alloy layer 2 is machined to be a flat surface having a fine roughness, and the overlay layer 3 is formed on the surface of the bearing alloy layer 2 after the bearing alloy layer 2 has been machined.

In Figs. 4(a) and (b), regular grooves are formed over the entire surface of the sliding bearing 1 as the uneven configuration, or circular or rectangular openings 6 may be formed as the regular uneven pattern as indicated in Figs. 4(c) and (d). In addition, the regular uneven configuration may be provided only in a region of the bearing which undergoes a severe load as shown in Figs. 4(e) and (f).

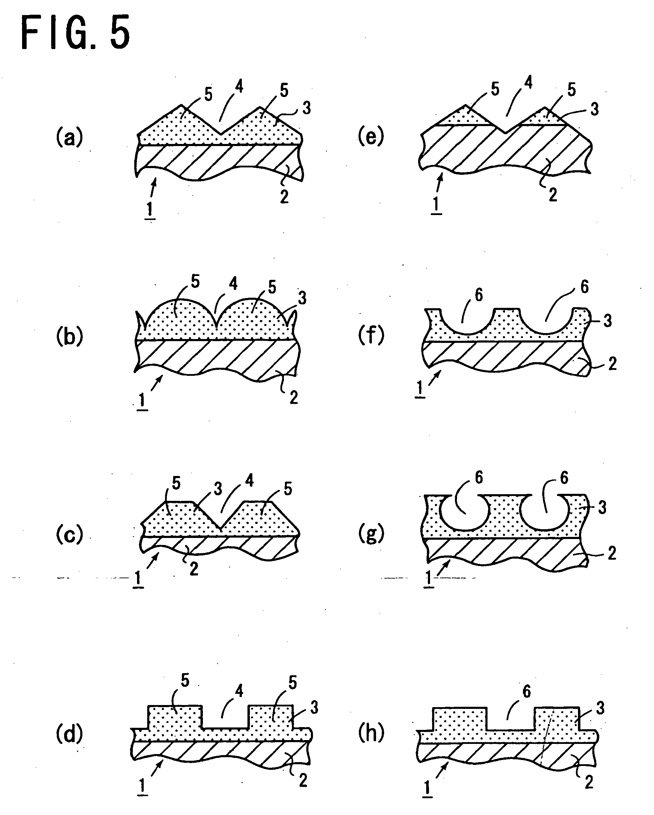

Fig. 5 shows cross sections which are contemplated for the regular uneven configurations. It is to be noted that parts corresponding to those shown for the sliding bearing 1 of the first embodiment are designated by like numerals.

It will be seen from these Figures that in contradistinction to the first embodiment, the configuration of the annular projection 5 may be triangular or arcuate as shown in Fig. 5(a) or (b), or a flat surface may be formed on the crest of the annular projection 5 as shown in Fig. 5(c) or (d). Alternatively, as shown in Fig. 5(e), which does not illustrate the invention, when forming the uneven configuration, not only the overlay layer 3, but the bearing alloy layer 2 may also be cut so as to expose the bearing alloy layer 2 at the bottom surface of the groove 4.

As further alternatives, when the openings 6 as indicated in Figs. 4(c) and (d) are used, configurations may be contemplated which provide arcuate bottom surfaces as shown in Figs. 5(f) and (g) or a flat bottom surface as shown in Fig. 5(h).

It is to be noted that the regular uneven configuration is formed by a transfer process rather than a boring process used in the first embodiment.

It should be understood that the configurations shown in Figs. 4 and 5 are only examples, and that these configurations can be suitably changed depending on the direction of rotation of the rotary shaft or other conditions.

While the regular uneven configuration is formed by a boring process in the first embodiment, a transfer process may be used as employed for the sliding bearings 1 shown in Figs. 4 and 5;

While PAI resin containing 40% of MoS₂ is used for the overlay layer in the experiment, it is also possible to use PAI resin or PI resin containing as additions one or more of MoS₂, graphite, BN (boron nitride), WS₂ (tungsten disulfide), PTFE (polytetrafluoroethylene), fluorinated resin, and Pb.

### AVAILABILITY IN INDUSTRIAL USE

In accordance with the present invention, a regular uneven configuration is formed on the surface of the overlay layer to allow a lubricant oil to be secured in recesses of the uneven configuration to enable a seizure resistance to be improved. In addition, since the bearing alloy layer is machined to be a flat surface having a fine roughness on its surface which represents a boundary with the overlay layer, individual projections are subject to a plastic deformation in an even manner, allowing the fitting property response of the sliding bearing to be improved.

## Claims

1. A sliding bearing (1) including a bearing alloy layer (2) and a continuous overlay layer (3) spread on the surface of the bearing alloy layer (2) and formed by a solid lubricant and a resin;
**characterized in that** a regular uneven patterned configuration is formed on the surface of the overlay layer (3) and that the bearing alloy layer (2) is formed to be a flat surface having a roughness of 2 µm Rz or less at its boundary with the overlay layer (3).

2. A sliding bearing according to Claim 1 wherein the regular uneven patterned configuration comprises grooves (4) and adjacent projections (5) which are formed at a given pitch (P) or an array of openings (6) of a given configuration aligned with each other at a given spacing and is formed over the entire region of the overlay layer (3) or part thereof.

3. A sliding bearing according to claim 1 or claim 2 wherein the overlay layer (3) comprises PAI resin or PI resin added with a combination of one or more of MoS₂, graphite, BN (boron nitride), WS₂ (tungsten disulfide), PTFE (polytetrafluoroethylene), fluorinated resin, and Pb and the bearing alloy layer comprises a copper bearing alloy or aluminium bearing alloy.

## Patentansprüche

1. Gleitlager (1), die eine Lagermetallschicht (2) und eine durchgehende Deckschicht (3) umfasst, die auf der Oberfläche der Lagermetallschicht (2) verteilt ist und aus einem festen Festschmierstoff und einem Harz besteht;
**dadurch gekennzeichnet, dass** eine regelmäßige, uneben strukturierte Anordnung auf der Oberfläche der Deckschicht (3) ausgebildet ist und dass die Lagermetallschicht (2) als glatte Fläche mit einer Rauigkeit Rz von 2 µm oder weniger an ihrer Grenze zu der Deckschicht (3) ausgebildet ist.

2. Gleitlager nach Anspruch 1, worin die regelmäßige, uneben strukturierte Anordnung Rillen (4) und benachbarte Vorsprünge (5), die in einem bestimmten Teilungsabstand (P) ausgebildet sind oder eine Anordnung von Öffnungen (6) einer bestimmten Konfiguration umfasst, die in Bezug aufeinander in einem bestimmten Abstand ausgerichtet sind, und über dem gesamten Bereich der Deckschicht (3) oder einem Teil davon ausgebildet ist.

3. Gleitlager nach Anspruch 1 oder 2, worin die Deckschicht (3) PAI-Harz oder PI-Harz umfasst, zu dem eine Kombination von MoS₂, Graphit, BN (Bornitrid), WS₂ (Wolframdisulfid), PTFE (Polytetrafluorethylen), fluoriertem Harz und Pb zugesetzt ist, und worin die Lagermetallschicht ein Kupferlagermetall oder ein Aluminiumlagermetall umfasst.

## Revendications

1. Palier à glissement (1) comprenant une couche d'alliage de palier (2) et une couche de recouvrement continue (3) étalée sur la surface de la couche d'alliage de palier (2) et formée par un lubrifiant solide et une résine ;
**caractérisé en ce qu'**une configuration à motif inégaux régulière est formée sur la surface de la couche de recouvrement (3) et **en ce que** la couche d'alliage de palier (2) est formée de sorte à être une surface plane ayant une rugosité de 2 µm Rz ou moins au niveau de sa limite avec la couche de recouvrement (3).

2. Palier à glissement selon la revendication 1, dans lequel la configuration à motifs inégaux régulière comprend des rainures (4) et des saillies adjacentes (5) qui sont formées selon un pas (P) donné ou une série d'ouvertures (6) d'une configuration donnée alignées les unes sur les autres selon un espacement donné et est formée sur l'ensemble de la région de la couche de recouvrement (3) ou une partie de celle-ci.

3. Palier à glissement selon la revendication 1 ou la revendication 2, dans lequel la couche de recouvrement (3) comprend de la résine PAI ou de la résine PI ajoutée à une combinaison d'un ou plusieurs éléments parmi le MoS₂, le graphite, le BN (nitrure de bore), le WS₂ (disulfure de tungstène), le PTFE (polytétrafluoroéthylène), la résine fluorée et le Pb, et la couche d'alliage de palier comprend un alliage de cuivre pour palier ou un alliage d'aluminium pour palier.
